# EUROPÄISCHE PATENTANMELDUNG

(11) **EP 1 275 557 A1**
(43) Veröffentlichungstag der Anmeldung: **15.01.2003**
(21) Anmeldenummer: 02015498.5
(22) Anmeldetag: 12.07.2002
(51) Int. Cl.: B60Q 1/26

(54) **Fahrzeugleuchtvorrichtung**

(30) Priorität: 13.07.2001 DE 20111537 U
(71) Anmelder: Jedermann, Frank, 56291 Hausbay (DE)
(72) Erfinder: Jedermann, Frank, 56291 Hausbay (DE)
(74) Vertreter: Herden, Andreas F.

(57) **Zusammenfassung**

Die Erfindung betrifft eine Fahrzeugleuchtvorrichtung (1), insbesondere eine Fahrzeugbegrenzungsleuchte zum externen Anbringen an einem Fahrzeug mittels eines Halters (20), umfassend eine Baugruppe mit einem Schaltungsträger (50) und zumindest einem ersten Leuchtmittel (42) und ein Gehäuse (10) mit zumindest einem ersten Lichtaustrittsbereich für Licht, welches von dem ersten Leuchtmittel (42) emittierbar ist, wobei die Baugruppe zumindest bereichsweise in dem Gehäuse (10) angeordnet ist und zumindest bereichsweise (60) ummantelt ist. Es ist daher eine Aufgabe der Erfindung, eine Fahrzeugleuchtvorrichtung zur Verfügung zu stellen, welche die Nachteile der bekannten Außenbeleuchtungen vermeidet oder zumindest mindert sowie kostengünstig herstellbar und einfach montierbar ist.

## Beschreibung

Die Erfindung betrifft eine Fahrzeugleuchtvorrichtung im allgemeinen und eine Fahrzeugbegrenzungsleuchte zum externen Anbringen an einem Fahrzeug im speziellen.

Fahrzeuge, insbesondere Kraftfahrzeuge (KFZ) weisen, zum Teil gesetzlich vorgeschrieben, verschiedene Leuchtvorrichtungen oder Beleuchtungen auf. So verfügt nahezu jedes Kraftfahrzeug über Frontscheinwerfer, Rücklichter und Bremsleuchten.

Größere Kraftfahrzeuge, z.B. Lastkraftwagen (LKW) oder Kraftfahrzeuganhänger weisen häufig noch externe Außenbeleuchtungsvorrichtungen in Form von Erkennungs- oder Begrenzungsleuchten, z.B. auf der hinteren Stoßstange auf. Diese dienen im wesentlichen dazu, dass andere Verkehrsteilnehmer im Dunkeln besser die Abmessungen eines LKW oder Anhängers erkennen können. Darüber hinaus erweisen sich derartige Begrenzungs- oder Positionsbeleuchtungen aber auch für den Fahrer selbst, z.B. beim Rangieren eines Lastzugs als vorteilhaft.

Aus dem deutschen Gebrauchsmuster DE-U-297 21 536.1 ist eine solche Außenbeleuchtungsvorrichtung bekannt, welche mit einer abgewinkelten Halterungseinrichtung außen am Fahrzeug befestigt werden kann. Diese Vorrichtung weist eine farblose Glühlampe auf, welche nährungssweise weißes Licht fast ungerichtet emittiert.

Eine zentrale Problematik bei solchen extern angebrachten Außenbeleuchtungsvorrichtungen für Kraftfahrzeuge ist die Wasserdichtigkeit, da die Beleuchtungsvorrichtung sich im wesentlichen ungeschützt im Freien, d.h. auch im Regen oder Spritzwasser von der Fahrbahn befindet. Daher ist die Glühlampe bei der aus dem Gebrauchsmuster DE-U-297 21 536.1 bekannten Vorrichtung zum Schutz vor Feuchtigkeit in einem doppelten Gehäuse untergebracht.

Diese bekannte Beleuchtungsvorrichtung hat sich in der Praxis sehr bewährt, ist aber relativ komplex und daher unter Umständen kostenintensiv in der Herstellung.

Überdies schützt das doppelte Glühlampengehäuse lediglich die Glühlampe effektiv vor Feuchtigkeit. Manche Vorrichtungen weisen aber noch eine Versorgungselektronik auf, welche ebenfalls durch Feuchtigkeit einer dauernden Korrosionsgefahr ausgesetzt sein kann. Ferner sind die Beleuchtungsvorrichtungen im täglichen Betrieb im Straßenverkehr extremen mechanischen Belastungen, z.B. durch Erschütterungen ausgesetzt. Dies kann zur Ermüdung von Lötstellen, Anschlußkontakten bis hin zur Zerstörung ganzer Bauelemente führen. Bislang ist noch keine überzeugende Lösung zum umfassenden Schutz der Versorgungselektronik bekannt.

Weiter haben die verwendeten Glühlampen einen relativ geringen Wirkungsgrad für die Umwandlung von elektrischer Energie in sichtbares Licht, so dass einerseits ein hoher Stromverbrauch zu Buche schlägt und andererseits eine hohe thermische Belastung in dem Gehäuse auftritt. Ersteres wirkt sich besonders nachteilig aus, wenn eine Mehrzahl derartiger Beleuchtungen an einem Kraftfahrzeug angebracht sind und diese in Betrieb sind, während das Fahrzeug parkt und der Motor nicht läuft. Die Problematik der thermischen Belastung wird durch die Wasserdichtigkeit noch verschärft, weil dadurch Wärme im wesentlichen nur noch über Wärmestrahlung abgeführt werden kann.

Ferner soll üblicherweise in Fahrtrichtung weißes und entgegen der Fahrtrichtung rotes Licht abgestrahlt werden. Hierfür befindet sich typischerweise auf der Vorderseite der Glühlampe (in Fahrtrichtung) eine farblose und auf der Rückseite (entgegen der Fahrtrichtung) eine rote Plexiglasscheibe. Die Farbfilterung in rückwärtiger Richtung und die grundsätzlich ungerichtete Emissionscharakteristik bewirken allerdings Lichtverluste, d.h. wiederum eine relativ geringe Effizienz mit den bereits genannten thermischen Schwierigkeiten.

Es ist daher eine Aufgabe der Erfindung, eine Fahrzeugleuchtvorrichtung zur Verfügung zu stellen, welche die Nachteile der bekannten Außenbeleuchtungen vermeidet oder zumindest mindert sowie kostengünstig herstellbar und einfach montierbar ist.

Eine weitere Aufgabe der Erfindung ist es, eine Fahrzeugleuchtvorrichtung verfügbar zu machen, welche in hohem Maße widerstandsfähig gegen Feuchtigkeit und mechanische Belastungen ist.

Noch eine Aufgabe der Erfindung ist es, eine Fahrzeugleuchtvorrichtung verfügbar zu machen, welche einen hohen Wirkungsgrad hat und gute thermische Eigenschaften aufweist.

Die Aufgabe der Erfindung wird in überraschend einfacher Weise durch den Gegenstand der Ansprüche 1, 20 und 28, sowie einem Verfahren gemäß Anspruch 39 gelöst.

Die erfindungsgemäße Fahrzeugleuchtvorrichtung, welche insbesondere eine Fahrzeugbegrenzungsleuchte zum externen Anbringen an einem Fahrzeug ist, enthält zunächst eine Baugruppe, umfassend einen Schaltungsträger und zumindest ein erstes Leuchtmittel. Ferner umfasst die erfindungsgemäße Fahrzeugleuchtvorrichtung ein Gehäuse mit zumindest einem ersten Lichtaustrittsbereich für Licht, welches von dem ersten Leuchtmittel emittierbar ist oder emittiert wird. Ferner ist die Baugruppe zumindest bereichsweise in dem Gehäuse angeordnet und zumindest bereichsweise, bevorzugt mit Kunststoff, ummantelt.

Die Anordnung der Baugruppe zumindest bereichsweise in dem Gehäuse vereinfacht Herstellung und Montage der Vorrichtung. Die erfindungsgemäße Ummantelung der Baugruppe schützt diese sehr effektiv und vorteilhafterweise vor Feuchtigkeit und Materialermüdung durch mechanische Belastungen bei der Montage der Fahrzeugleuchtvorrichtung und vor Erschütterungen im Betrieb.

Vorzugsweise ist die Ummantelung als Umspritzung realisiert, wobei grundsätzlich bekannte Hochdruck-Kunststoffspritzverfahren Anwendung finden.

Vorzugsweise ist die Ummantelung oder Umspritzung elastisch und/oder fluid-, flüssigkeits- oder wasserdicht ausgeführt. Als Material für die Ummantelung oder Umspritzung hat sich Polyurethan (PU) als besonders geeignet erwiesen.

Eine besondere Ausführungsform der Erfindung umfasst eine elektrische Versorgungsleitung, deren freies Ende einen Kontaktabschnitt des Schaltungsträgers kontaktiert. Die Kontaktverbindung ist z.B. gelötet, gesteckt oder gekrimpt. Vorteilhafterweise sind der Kontaktabschnitt und das freie Ende der Versorgungsleitung ebenfalls mit Kunststoff ummantelt oder umspritzt. Besonders vorteilhaft ist eine bevorzugte Weiterbildung, bei welcher der gesamte Schaltungsträger und/oder das freie Ende der Versorgungsleitung im wesentlichen vollständig und/oder einstückig umspritzt sind.

Bevorzugt umfasst die Baugruppe eine Versorgungsschaltung für das erste Leuchtmittel. Die Versorgungsschaltung umfasst insbesondere einen Verpolschutz, z.B. einen Gleichrichter, und einen Spannungsreduzierer, z.B. eine Widerstandsanordnung, welche beide insbesondere auch vollständig und fluiddicht umspritzt sind. Somit ist auch die Versorgungsschaltung dauerhaft vor Feuchtigkeit und Erschütterungen geschützt.

Vorzugsweise sind der Spannungsreduzierer und der zugehörige Abschnitt des Schaltungsträgers außerhalb des Gehäuses angeordnet, so dass die Verlustleistung des Spannungsreduzierers nicht in dem Gehäuse oder Leuchtvolumen anfällt.

Eine bevorzugte Ausführungsform der Erfindung ist dadurch gekennzeichnet, dass die Ummantelung oder Umspritzung, insbesondere einstückig, einen Dichtungsabschnitt und/oder eine Dichtung aufweist, welche im wesentlichen fluiddicht in eine Gehäuseöffnung einpassbar sind. Bevorzugterweise ist das Gehäuse im wesentlichen fluiddicht.

Zur weiteren mechanischen Verstärkung weist die Ummantelung oder Umspritzung vorzugsweise Versteifungsabschnitte auf. Diese umfassen oder sind insbesondere länglich ausgebildete Verstrebungen oder Rippen, welche sich entlang der Längsachse des Schaltungsträgers erstrecken.

Die erfindungsgemäße Fahrzeugleuchtvorrichtung umfasst vorzugsweise einen Halter oder eine Halteeinrichtung aus elastischem und/oder schlagzähem Material, z.B. Gummi oder Kunststoff, insbesondere EPDM mit einem Fuß- und einem Kopfabschnitt. Der Halter ist insbesondere gewinkelt oder gerade. Der Kopfabschnitt ist vorzugsweise ringförmig ausgebildet und an die Gehäuseform angepasst, so dass das Gehäuse in den Kopfabschnitt einführbar ist. Der Fußabschnitt dient der Befestigung an dem Fahrzeug, er ist an einer Stoßstange anschraubbar.

Besonders bevorzugt ist eine Weiterbildung der Erfindung, bei welcher der Halter röhrenartig einen Hohlraum definiert, in welchem zumindest ein Abschnitt des umspritzten Schaltungsträgers angeordnet ist, wenn das Gehäuse in dem Kopfabschnitt eingeführt und festgelegt ist. Diese kombiniert form- und reibschlüssige Steckverbindung ist, insbesondere ohne weitere Befestigungsmittel, einfach zu montieren und zu demontieren und ist trotzdem im montierten Zustand sehr stabil.

Bevorzugt weist das Gehäuse, insbesondere der erste Lichtaustrittsbereich eine erste Lichtscheibe, z.B. aus farblosem oder gelblichem Kunststoff auf. Durch diese Lichtscheibe, z.B. aus Acrylglas oder insbesondere aus Polycarbonat ist das Licht des ersten Leuchtmittels aus dem Gehäuse nach außen emittierbar. Die Lichtscheibe ist insbesondere fluiddicht mit dem Gehäuse verbunden, z.B. verklebt oder verschweißt oder ist einstückig mit diesem ausgebildet oder geformt.

Die erste Lichtscheibe weist vorzugsweise ein lichtbrechendes optisches Element, z.B. eine Streulinse, z.B. eine Fresnellinse auf. Das optische Element ist insbesondere rotationssymmetrisch und zentriert in Bezug auf das erste Leuchtmittel.

Als besonders vorteilhaft und daher bevorzugt hat sich die Verwendung von zumindest einer ersten Leuchtdiode oder Halbleiterleuchtdiode als erstes Leuchtmittel erwiesen, da Leuchtdioden einen hohen Wirkungsgrad aufweisen und in vielen verschiedenen Färbungen erhältlich sind. Folglich kann durch die Wahl der Leuchtdiode bereits ein Wellenlängenintervall des emittierten Lichts definiert werden. Ferner sind Leuchtdioden wasserdicht und erschütterungsfest. Bevorzugt sind die Anschlüsse der Leuchtdiode und ein Abschnitt ihres Kunststoffkörpers ebenfalls von der Ummantelung umgeben, d.h. auch ummantelt oder umspritzt.

Eine besonders bevorzugte Weiterbildung der Erfindung umfasst eine Leuchtmittelanordnung, zu welcher das erste und zumindest ein weiteres, insbesondere separates, zweites Leuchtmittel gehört. Die Leuchtmittelanordnung ist in dem Gehäuse angeordnet, so dass dieses auch als Leuchtvolumen bezeichnet werden kann. Das Gehäuse weist neben dem ersten Lichtaustrittsbereich noch zumindest einen zweiten Lichtaustrittsbereich auf, wobei Licht von dem ersten Leuchtmittel im wesentlichen nur oder ausschließlich durch den ersten Lichtaustrittsbereich und Licht von dem zweiten Leuchtmittel im wesentlichen nur oder ausschließlich durch den zweiten Lichtaustrittsbereich aus der Vorrichtung emittiert wird. Mit anderen Worten strahlt das erste Leuchtmittel in einen ersten Raumwinkel und das zweite Leuchtmittel in einen zweiten Raumwinkel, wobei der erste und zweite Raumwinkel verschieden, insbesondere entgegengesetzt gerichtet sind.

Somit leuchtet z.B. das erste Leuchtmittel mit weißem Licht in Fahrtrichtung und das zweite Leuchtmittel mit rotem Licht entgegen der Fahrtrichtung. Besonders bevorzugt werden als erstes und zweites Leuchtmittel erste bzw. zweite Leuchtdioden verwendet, welche insbesondere verschiedenfarbig sind. In diesem Fall erübrigt sich eine Farb- oder Wellenlängenfilterung mittels der Lichtaustrittsscheibe, so dass in Vorwärts- und Rückwärtsrichtung im wesentlichen farblose oder zur leichten Tönung gelbliche Lichtaustrittsscheiben verwendet werden können. Dies vereinfacht, insbesondere wenn die Lichtaustrittsscheiben und das Gehäuse einstückig ausgebildet sind, die Produktion signifikant. Selbstverständlich ist eine zusätzliche Farboder Wellenlängenfilterung des emittierten Lichts trotzdem möglich.

Das erste und/oder zweite Leuchtmittel emittieren Licht vorzugsweise im wesentlichen gerichtet. Die erste und/oder zweite Leuchtdiode weisen einen insbesondere einen Öffnungswinkel des Lichtemissionskegels von etwa 0° bis 180°, bevorzugt von etwa 30° bis 120° und besonders bevorzugt von etwa 60° bis 90° auf und sind gegenüberliegend angeordnet. Zur darüberhinaus gehenden optischen Trennung ist zwischen dem ersten und zweiten Leuchtmittel vorzugsweise eine, insbesondere schwarze Trennwand angeordnet, welche bevorzugt mit der Ummantelung oder Umspritzung einstückig hergestellt und/oder ausgebildet ist. Die Form des Mittels zur optischen Trennung oder der Trennwand ist an den Querschnitt des Gehäuses angepasst, so dass das rote Licht des ersten Leuchtmittels im wesentlichen nur nach hinten und das weiße Licht des zweiten Leuchtmittels im wesentlichen nur nach vorne aus dem Gehäuse austreten kann.

Bevorzugterweise befinden sich auf der, insbesondere flügelartigen Trennwand Rippen, welche die Oberfläche vergrößern. Um eine weiter verbesserte Wärmeabstrahlung zu erzielen, kann eine Wärmeleitschicht, z.B. in Form einer Kupferfolie in der Trennwand vorgesehen, insbesondere vollständig umschlossen eingespritzt sein.

Die Trennwand, insbesondere die Flügel ist/sind zweckmäßig elastisch reversibel biegbar.

Im Rahmen der Erfindung liegt es auch, eine Baugruppe anzugeben, die in hohem Maße widerstandsfähig gegen Feuchtigkeit und mechanische Belastungen ist und welche insbesondere für eine wie oben beschriebene Fahrzeugleuchtvorrichtung verwendet werden kann. Die Baugruppe umfasst einen Schaltungsträger und zumindest ein erstes Leuchtmittel, wobei die Baugruppe eine Ummantelung aufweist, welche den Schaltungsträger umgibt und eine fluiddichte, insbesondere eine wasserdichte Umspritzung umfaßt. Besonders bevorzugt umfaßt dabei das Leuchtmittel eine Leuchtdiode. Die Baugruppe wird im folgenden auch als Leuchtmittelbaugruppe bezeichnet.

Beim Umspritzen des Schaltungsträgers ergibt sich allerdings die Schwierigkeit, daß der Schaltungsträger in der Spritzform ausgerichtet und fixiert sein sollte. Ansonsten besteht die Gefahr, daß der Schaltungsträger oder andere Komponenten, wie etwa die Versorgungsleitung an den Rand der Spritzform geraten und so von außen sichtbar bleiben. Insbesondere bleiben diese Teile nach dem Umspritzen in ihrer falschen Lage fixiert. Daher ist es vorteilhaft, wenn die Ummantelung einen Halter umfaßt, in welchem der Schaltungsträger aufgenommen und fixiert ist. Wird der Halter in eine geeignet geformte Spritzform eingesetzt, so bleibt der Schaltungsträger und andere mit diesem verbundene Teile, wie etwa die Zuführungsleitung oder das Leuchtmittel während des Umspritzens in einer definierten Position festgehalten.

Vorteilhaft ist außerdem, wenn die Versorgungsleitung zusätzlich in dem Halter geführt ist. Auf diese Weise ist die Versorgungsleitung neben der Verbindung am Schaltungsträger noch an wenigstens einem weiteren Punkt in ihrer Position festgelegt und kann nicht an den Rand der Spritzform geraten.

Der Halter der Leuchtmittelbaugruppe kann beispielsweise zwei Halbschalen umfassen. Dadurch läßt sich die Baugruppe in besonders einfacher Weise vor dem Umspritzen vormontieren, indem der Schaltungsträger zwischen die beiden Halbschalen gesetzt und auf diese Weise fixiert wird.

Bevorzugt definiert der Halter einen Innenbereich oder Innenaum, in welchem der Schaltungsträger aufgenommen ist, so daß der im Innenraum angeordnete Schaltungsträger von außen nicht zugänglich ist.

Die Umspritzung kann vorteilhaft dann so ausgeführt sein, daß sie zumindest bereichsweise den Innenbereich des Halters auffüllt.

Der Halter kann außerdem zumindest einen Überströmkanal aufweisen, um zu erreichen, daß beim Umspritzen der Innenbereich des Halters aufgefüllt wird, indem durch die Überströmkanäle das Umspritzmaterial von außen in den Innenbereich eindringt.

Alternativ oder zusätzlich zu einem Umspritzen des Innenbereiches kann der Halter auch zumindest bereichsweise von der Umspritzung umgeben werden. Eine solche äußere Umspritzung kann beispielsweise neben einer Versiegelung des Schaltungsträgers auch für die dauerhafte Fixierung der Halbschalen des Trägers dienen.

Um eine besonders einfache Befestigung der Leuchtmittelbaugruppe zu ermöglichen, kann diese weiterhin zumindest eine Rastnase und/oder Rastrippe aufweisen, welche geeignet ist, eine formschlüssige Verbindung mit einem anderen Teil, wie etwa dem Gehäuse der Fahrzeugleuchtvorrichtung herzustellen.

Gemäß einer Ausführungsform der erfindungsgemäßen Baugruppe umfaßt ferner die Ummantelung eine transparente Kappe. Das Leuchtmittel kann hinter der Kappe angeordnet und damit wie auch der Schaltungsträger hermetisch von Umgebungseinflüssen abgeschlossen sein.

Die Erfindung sieht außerdem vor, ein Verfahren zur Herstellung einer Baugruppe für eine Fahrzeugleuchtvorrichtung anzugeben, welche insbesondere für eine wie oben beschriebene Fahrzeugleuchtvorrichtung verwendet werden kann.

Das Verfahren umfaßt die Schritte:
- Anschließen einer elektrischen Versorgungsleitung an einen Schaltungsträger mit zumindest einem ersten Leuchtmittel,
- Anordnen des Schaltungsträgers in einer Spritzform und
- Umspritzen des Schaltungsträgers mit Kunststoff.

Durch das Umspritzen des Schaltungsträgers wird eine Ummantelung bereitgestellt, welche den Schaltungsträger hermetisch gegen schädliche Umgebungseinflüsse, wie mechanischen Belastungen oder Luft- und Feuchtigkeitseinwirkungen versiegelt. Bevorzugt wird dabei die Baugruppe mit elastischem Kunststoff umspritzt. Dieser kann beispielsweise Stoßeinwirkungen abfangen, ohne sie in selbem Maße an den Schaltungsträger weiterzugeben und behält auch bei mechanischer Verformung seine Dichtigkeit bei.

Das Verfahren kann auch so weitergebildet werden, daß der Schaltungsträger mit dem Leuchtmittel vor dem Anordnen in der Spritzform in oder an einem Halter befestigt wird. Der Halter kann dann zusammen mit dem Schaltungsträger in der Spritzform umspritzt werden und es wird verhindert, daß umspritzte Komponenten an den Rand der Spritzform geraten und nach der Fertigstellung der Baugruppe an deren Oberfläche hervortreten. Weiterhin kann das Verfahren vorteilhaft den Schritt des Zusammensetzens des Halters aus zumindest zwei Halbschalen umfassen. Durch das Zusammensetzen der Halbschalen können zwischen diesen verschiedene Komponenten, wie insbesondere der Schaltungsträger angeordnet und fixiert werden.

Bevorzugt definiert der Halter einen Innenbereich, in welchem der Schaltungsträger angeordnet wird. Dieser Innen bereich kann mit Umspritzmaterial aufgefüllt werden.

Der Halter kann gemäß noch einer Weiterbildung aber auch nur außen umspritzt werden, so daß der Innenbereich, welcher im Halter definiert ist und in welchem der Schaltungsträger angeordnet wird, nicht mit Umspritzungsmaterial aufgefüllt wird. Der Schaltungsträger und die daran befestigten Komponenten stehen so nicht direkt mit dem Umspritzmaterial in Kontakt. Dennoch wird durch das äußere Umspritzen eine hermetische Versiegelung der Schaltung auf dem Schaltungsträger hergestellt.

Das Umspritzen kann außerdem noch den Schritt des Befestigens einer transparenten Kappe umfassen, durch welche das Licht des Leuchtmittels nach außen treten kann und welche die Anordnung einschließlich des Leuchtmittels hermetisch versiegelt.

Im Folgenden wird die Erfindung anhand besonders bevorzugter Ausführungsbeispiele und unter Bezugnahme auf die Figuren näher erläutert.

### Kurzbeschreibung der Figuren

Es zeigen
- Fig. 1: eine Vorderansicht einer Ausführungsform der erfindungsgemäßen Fahrzeugleuchtvorrichtung,
- Fig. 2: einen Schnitt entlang der Linie A-A in Fig. 1,
- Fig. 3: einen Schnitt entlang der Linie B-B in Fig. 1,
- Fig. 4: eine perspektivische Ansicht einer Leuchtmittelbaugruppe von schräg oben
- Fig. 5: eine Vorderansicht der Leuchtmittelbaugruppe aus Fig. 4,
- Fig. 6: eine Seitenansicht der Leuchtmittelbaugruppe aus Fig. 4,
- Fig. 7: eine Draufsicht von oben der Leuchtmittelbaugruppe aus Fig. 4.
- Fig. 8: eine Ansicht einer Halbschale einer weiteren Ausführungsform einer Leuchtmittelbaugruppe mit montierter Elektronik,
- Fig. 9: eine Ansicht der Ausführungsform der Leuchtmittelbaugruppe aus Fig. 8 mit zusammengesetzten Halbschalen,
- Fig. 10: eine Ansicht der fertig verkapselten Ausführungsform der Leuchtmittelbaugruppe der Fig. 8 und 9 mit umspritzter Elektronik und Halterung.
- Fig. 11: eine Schnittansicht durch die in Fig. 10 dargestellte Ausführungsform der Leuchtmittelbaugruppe mit Schnitt entlang der Linie A-A in Fig. 13,
- Fig. 12: eine Ansicht der Leuchtmittelbaugruppe aus Richtung des Pfeils E in Fig. 11,
- Fig. 13: eine Ansicht der Leuchtmittelbaugruppe aus Richtung des Pfeils F in den Fig. 11 und 12,
- Fig. 14: eine Schnittansicht durch die in Fig. 10 dargestellte Ausführungsform der Leuchtmittelbaugruppe mit Schnitt entlang der Linie B-B in Fig. 13,
- Fig. 15: eine Ansicht noch einer weiteren Ausführungsform einer Leuchtmittelbaugruppe, und
- Fig. 16: eine Schnittansicht durch die Leuchtmittelbaugruppe aus Fig. 15 entlang der Schnittlinie A-A in Fig. 15.

### Detaillierte Beschreibung der Erfindung

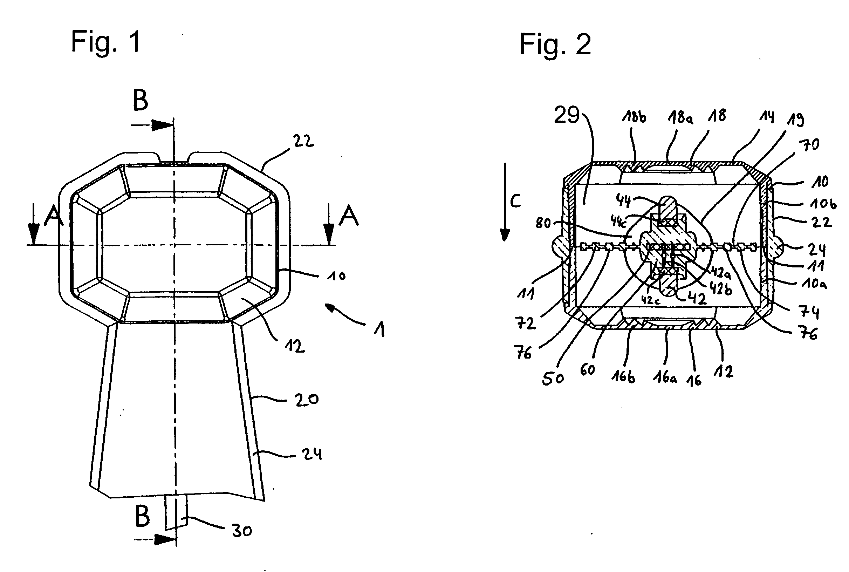

Fig. 1 zeigt eine beispielhafte Ausführungsform der erfindungsgemäßen Fahrzeugleuchtvorrichtung 1 mit einem Gehäuse 10 von achteckigem Querschnitt und einem elastischen, lichtundurchlässigen Halter 20. Der elastische Halter 20 umfasst einen im wesentlichen achteckigen, beidseitig offenen Kopfabschnitt 22 und einen mittig umlaufenden Wulst 24 von halbkreisförmigem Querschnitt. Der Halter 20 ist von grundsätzlich bekannter Art und umfasst ferner einen nicht dargestellten Fußabschnitt. Das Gehäuse 10 ist passend in den Kopfabschnitt 22 eingesetzt und umfasst eine erste Lichtaustrittsscheibe 12, welche einstückig mit dem Gehäuse 10 hergestellt ist.

Eine Versorgungsleitung 30 erstreckt sich im wesentlichen parallel zur Schnittachse B-B innerhalb des röhrenartigen elastischen Halters 20.

Fig. 2 stellt einen Schnitt entlang der Linie A-A in Fig. 1 dar. Fig. 2 zeigt das Gehäuse 10, welches aus zwei Hälften 10a, 10b mittig zusammengesetzt ist. Die beiden Hälften 10a, 10b des Gehäuses 10 sind an der, um den Querschnitt umlaufenden Naht 11, verklebt, verschweißt oder anderweitig dauerhaft und fluiddicht verbunden. Die erste der beiden Hälften 10a des Gehäuses 10 ist einstückig mit der Lichtaustrittsscheibe 12 und die zweite der beiden Hälften 10b des Gehäuses 10 ist einstückig mit einer zweiten Lichtaustrittsscheibe 14 ausgebildet. Beide Gehäusehälften 10a, 10b und beide Lichtaustrittsscheiben 12, 14 sind aus lichtdurchlässigem, klarem und gelblich getöntem oder gefärbtem Acrylglas oder Polycarbonatglas gefertigt. Insbesondere sind die erste Lichtaustrittsscheibe 12 und die zweite Lichtaustrittsscheibe 14 von selber Tönung oder Färbung.

Die erste und zweite Lichtaustrittsscheibe 12, 14 weisen eine erste bzw. zweite Fresnel-Streulinse 16, 18 auf. Die Fresnellinsen 16, 18 sind rotationssymmetrisch zentriert um den Schnittpunkt der Achsen A-A und B-B in Fig. 1. Ferner weisen die beiden Fresnellinsen 16, 18 je einen, im wesentlichen nicht streuenden Zentralbereich 16a bzw. 18a und je einen streuenden Außenbereich 16b bzw. 18b mit je drei Fresnelringen auf.

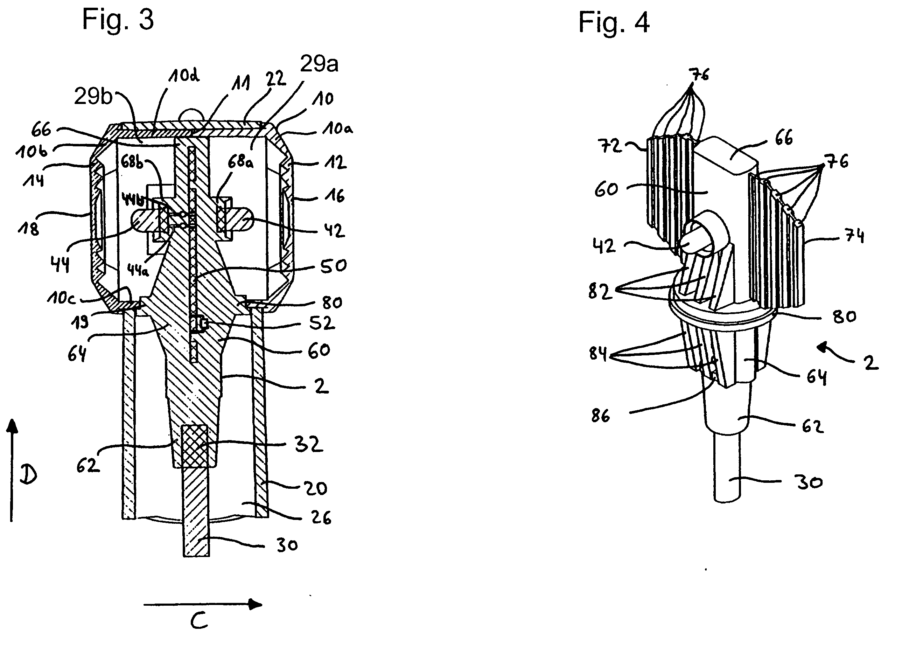

Im Innenbereich oder Leuchtvolumen 29 des Gehäuses 10 befinden sich ein erstes und zweites Leuchtmittel 42, 44 in Form je einer Halbleiterleuchtdiode. Die erste oder vordere Leuchtdiode 42 ist zur Emission von weißem Licht und die hintere oder zweite Leuchtdiode 44 zur Emission von rotem Licht ausgebildet. Beide Leuchtdioden 42, 44 sind mittels ihrer je zwei Anschlussbeine 42a, 42b bzw. 44a, 44b (siehe Fig. 3) in Löcher in einen Schaltungsträger 50 gesteckt und mit Leiterbahnen des Schaltungsträgers 50 verlötet. Die erste und zweite Leuchtdiode 42, 44 sind zueinander entgegen gerichtet und die Anschlussbeine 42a, 42b der ersten Leuchtdiode 42 sind bezüglich der Anschlussbeine 44a, 44b der zweiten Leuchtdiode 44 um 90° azimuthal zur Vorwärts-Rückwärtsrichtung gedreht.

Der Schaltungsträger 50, die Anschlussbeine 42a, 42b, 44a, 44b und je ein Fußabschnitt 42c, 44c der ersten bzw. zweiten Leuchtdiode 42, 44 sind fluiddicht mit Kunststoff umspritzt. Die Umspritzung 60 ist ferner einstückig mit einer Trennwand 70 und einem Dichtungsabschnitt oder einer Dichtung 80 ausgebildet. Die Trennwand 70 umfasst einen ersten und zweiten Flügel 72, 74, welche beide jeweils fünf, teilweise verschieden breite Rippen 76 aufweisen.

Die Trennwand 70 ist im wesentlichen lichtundurchlässig und trennt optisch das Leuchtvolumen 29 in zwei Leuchtvolumina 29a, 29b, entsprechend den beiden Gehäusehälften 10a bzw. 10b. Ferner erstreckt sich die Trennwand 70 im wesentlichen senkrecht zur Fahrtrichtung C.

Die Ausführung der Umspritzung 60 ist am besten in Fig. 3 zu sehen. Die Versorgungsleitung 30 erstreckt sich innerhalb eines Hohlraums des röhrenförmigen Halters 20. Die Umspritzung 60 umfasst einen sich nach unten verjüngenden Zugentlastungsabschnitt 62, einen verstärkten zentralen Rumpfabschnitt 64 und einen Kopfabschnitt 66. Ein freies Ende 32 der Versorgungsleitung 30 ist von dem Zugentlastungsabschnitt 62 umgeben und wird von diesem im wesentlichen kraftschlüssig gehalten. Die Isolationshülle der Versorgungsleitung und die Umspritzung 60 bestehen aus oder enthalten Polyurethan (PU). Der Rumpfabschnitt 64 umfasst den Dichtungsabschnitt 80, welche von unten in Richtung D in eine Öffnung 19 des Gehäuses 10 im wesentlichen wasserdicht eingeführt ist. Zusätzliche Dichtmittel zwischen dem Dichtungsabschnitt 80 und der Öffnung 19 können vorgesehen sein, sind aber nicht dargestellt.

Der Kopfabschnitt 66 ist im wesentlichen länglich quaderförmig ausgebildet und erstreckt sich von einer unteren Gehäusewandung 10c bis zu einer oberen Gehäusewandung 10d. Der Kopfabschnitt 66 der Umspritzung 60 umfasst weiter zwei Leuchtmittelbefestigungsabschnitte 68a und 68b, welche die vordere, erste Leuchtdiode 42 bzw. die hintere zweite Leuchtdiode 44 bereichsweise umgeben und diese form- und kraftschlüssig befestigen. Der Schaltungsträger 50 erstreckt sich bereichsweise innerhalb des Gehäuses 10, bereichsweise innerhalb der Öffnung 19 und bereichsweise innerhalb des Hohlraums 26 des Halters 20. Auf dem Schaltungsträger befindet sich eine mitumspritzte Versorgungsschaltung mit einem Spannungsreduzierer in Form einer Widerstandsanordnung 52. Ferner ist der Schaltungsträger 50 von der Umspritzung vollständig umgeben und damit fluiddicht eingeschlossen. Die Versorgungsleitung 30, der Schaltungsträger 50 mit der ersten und zweiten Leuchtdiode und der Widerstandsanordnung 52 sowie die Umspritzung 60 bilden eine stabile Einheit oder Leuchtmittelbaugruppe 2.

Fig. 4 zeigt eine perspektivische Ansicht der Leuchtmittelbaugruppe 2 von schräg oben. Die Umspritzung 60 weist oberhalb und unterhalb der Dichtung 80 jeweils drei Verstrebungen oder Versteifungsrippen 82 bzw. 84 auf. Die Versteifungsrippen 82, 84 sind im wesentlichen dreiecksförmig und erstrecken sich in einer Ebene, welche von den Richtungen C und D in Fig. 3 aufgespannt wird. Die Versteifungsrippen 82 verstärken den im wesentlichen quaderförmigen Kopfabschnitt 66 gegen eine Verbiegung in Vorwärts- oder Rückwärtsrichtung, d.h. eine Verbiegung senkrecht zur Ebene des Schaltungsträgers 50. Die Verstrebungen 84 versteifen einen Bereich des Rumpfabschntts unterhalb der Dichtung 80 ebenfalls gegen eine Verbiegung in Vorwärts- oder Rückwärtsrichtung. Die unteren Verstrebungen 84 sind überdies durch horizontal verlaufende Querrippen 86 weiter verstärkt. Hierdurch wird eine extrem verbiegungs- und verwindungsreife Anordnung zum Schutz des Schaltungsträgers und der darauf befindlichen elektronischen Bauteile, z.B. der ersten und zweiten Leuchtdiode 42, 44 und der Widerstandsanordnung 52 oder der Versorgungsschaltung erzielt. Andere Formen der Verstrebung sind allerdings auch möglich.

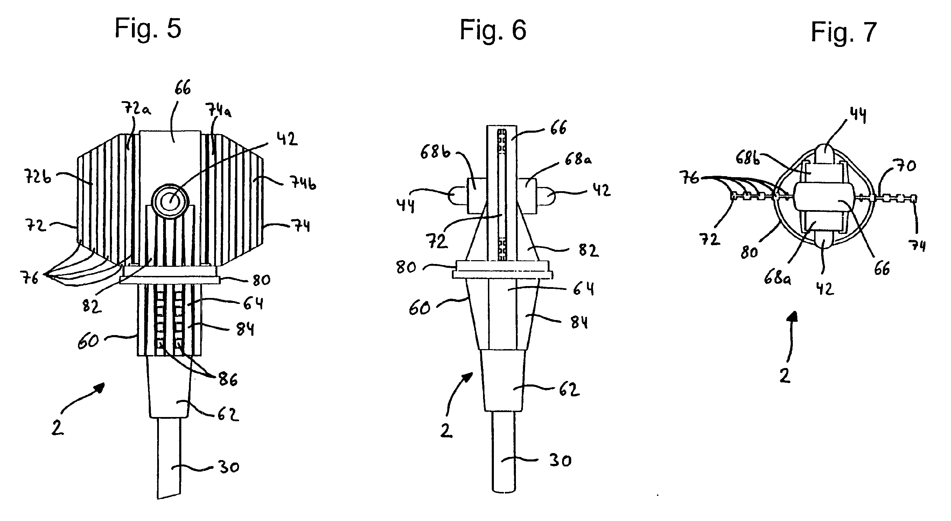

In Fig. 5 ist am besten die Form der beiden symmetrischen Flügel 72, 74 der Trennwand 70 zu sehen. Die Flügel 72, 74 besitzen je einen inneren, im wesentlichen rechteckigen Abschnitt 72a, 74a, und jeweils einen trapezförmigen äußeren Abschnitt 72b, 74b. Die äußere Form der Umspritzung 60 oberhalb der Dichtung 80 wird im wesentlichen durch die beiden Flügel 72, 74 und den Kopfabschnitt 66 als ein an die Form des Gehäuses angepasstes Achteck definiert.

Die Rippen oder Kühlrippen 76 erstrecken sich parallel zu der Richtung D in Fig. 3.

Zur Herstellung der Leuchtmittelbaugruppe 2 werden zunächst die Versorgungsleitung 30, die beiden Leuchtdioden 42, 44 und die nicht dargestellte Versorgungsschaltung auf den Schaltungsträger 50 angebracht und z.B. verlötet. Danach wird die Anordnung mittels Hochdruck-Kunststoffspritztechnik unter Ausbildung der Flügel 72, 74 einstückig umspritzt.

Zur Montage werden die elastischen Flügel 72, 74 bis zu 90° oder weiter, z.B. bis zum mechanischen Kontakt mit einer der beiden Leuchtdioden gebogen und werden zusammen mit dem Umspritzungs-Kopfabschnitt 66 durch die Öffnung 19 in das Gehäuse 10 eingeführt. Ein Zürückschnappen der Flügel 72, 74 in die in Fig. 4 gezeigte entspannte Stellung bewirkt eine Arretierung der Leuchtmittelbaugruppe 2 in, bzw. an dem Gehäuse 10. Danach wird das Gehäuse 10 unter elastischer Verformung des Halter-Kopfabschnitts 22 in diesen eingesetzt.

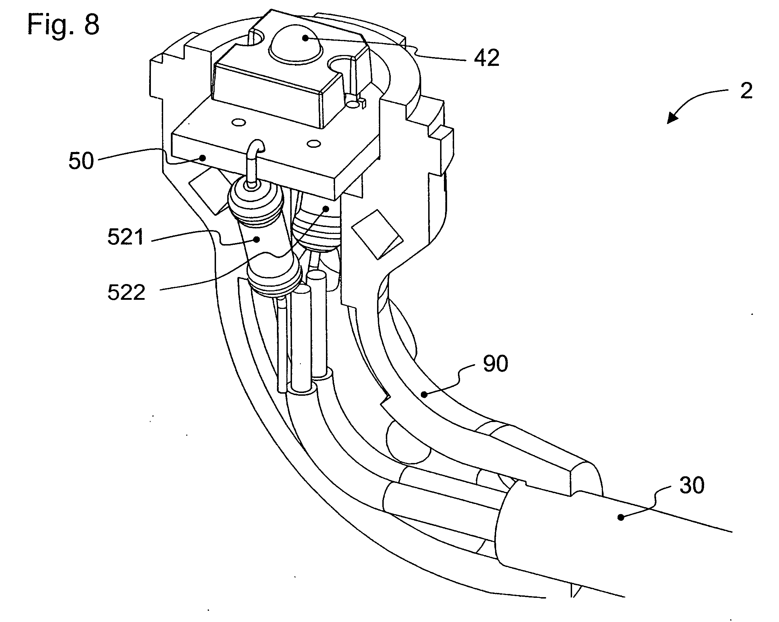

Im folgenden wird auf die Figuren 8 bis 14 Bezug genommen, welche eine weitere Ausführungsform einer Leuchtmittelbaugruppe 2 darstellen, wie sie in einer erfindungsgemäßen Fahrzeugleuchtvorrichtung verwendet werden kann.

Die Baugruppe 2 weist eine Ummantelung auf, die einen Halter 88 umfaßt. Im Halter 88 ist der Schaltungsträger 50 aufgenommen. Wie bei den oben beschriebenen Ausführungsformen sind die Anschlußbeine 42a und 42b einer Leuchtdiode in Löcher im Schaltungsträger 50 gesteckt und mit Leiterbahnen des Schaltungsträgers 50 verlötet.

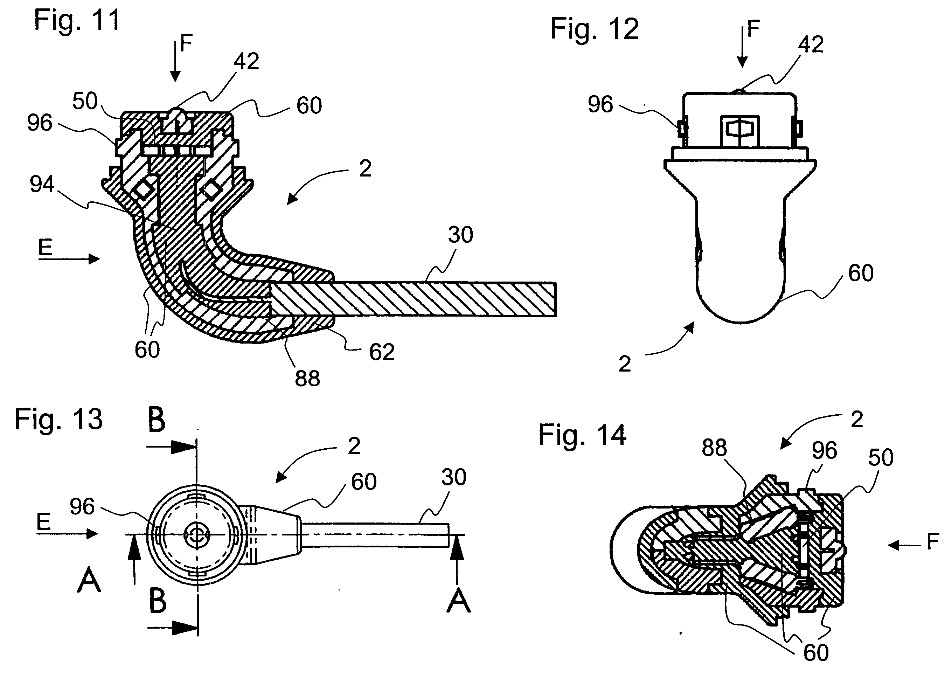

Wie anhand von Fig. 11 zu erkennen ist, wird bei dieser Ausführungsform außerdem die Versorgungsleitung 30 in dem Halter 88 geführt. Damit wird erreicht, daß die Versorgungsleitung 30, sowie die Litzen 301, 302 der Versorgungsleitung 30 nicht an den Rand der für das Umspritzen verwendeten Spritzform geraten und so nach Fertigstellung der Baugruppe an deren Oberflächen hervortreten können.

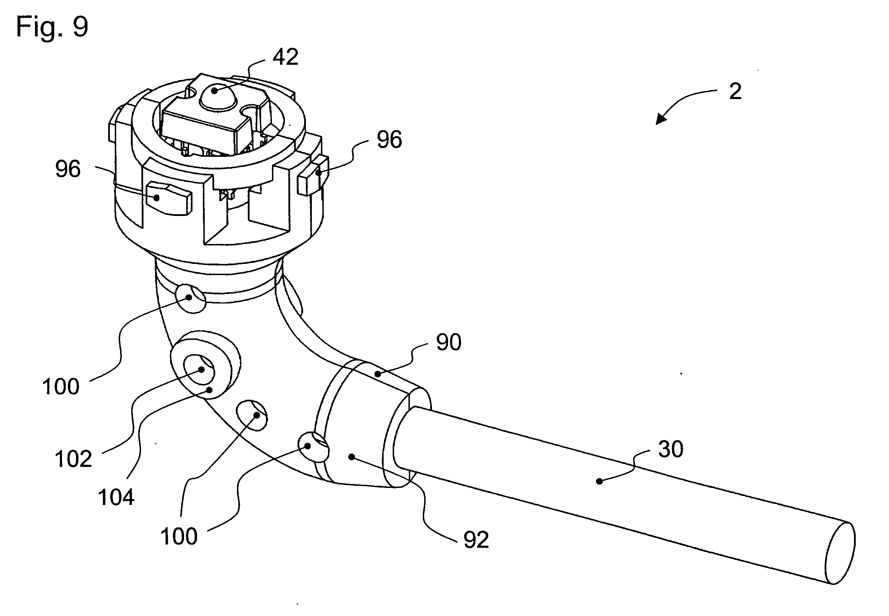

Der Halter 88 der Baugruppe 2 umfaßt zwei Halbschalen 90 und 92. Die Baugruppe wird, wie anhand der Figuren 8 und 9 verdeutlicht ist, durch Einsetzen des Schaltungsträgers 50 und der Versorgungsleitung 30 in eine der Halbschalen und Befestigen der anderen Halbschale vormontiert. Dabei definiert der Halter einen Innenbereich 94, in welchem der Schaltungsträger 50 aufgenommen ist.

Die Halbschalen 90 und 92 weisen jeweils Überströmkanäle 100, sowie eine Entlüftungsöffnung 102 auf. Die Entlüftungsöffnung 102 ist dabei in einen hervorragenden Kragen 104 eingefügt.

Für das Umspritzen wird die vormontierte Baugruppe in eine geeignet geformte Spritzform eingesetzt, die ebenfalls Entlüftungsöffnungen aufweist, welche mit den Entlüftungsöffnungen 102 korrespondieren. Ist die vormontierte Baugruppe 2 eingesetzt, so treffen die Entlüftungsöffnungen 102 der Baugruppe und die Entlüftungsöffnungen der Spritzform aufeinander. Dabei liegen die Kragen 104 an der Spritzform an und bilden eine Abdichtung, so daß beim Umspritzen das Umspritzmaterial nicht in die Entlüftungsöffnungen eindringen und diese verstopfen kann.

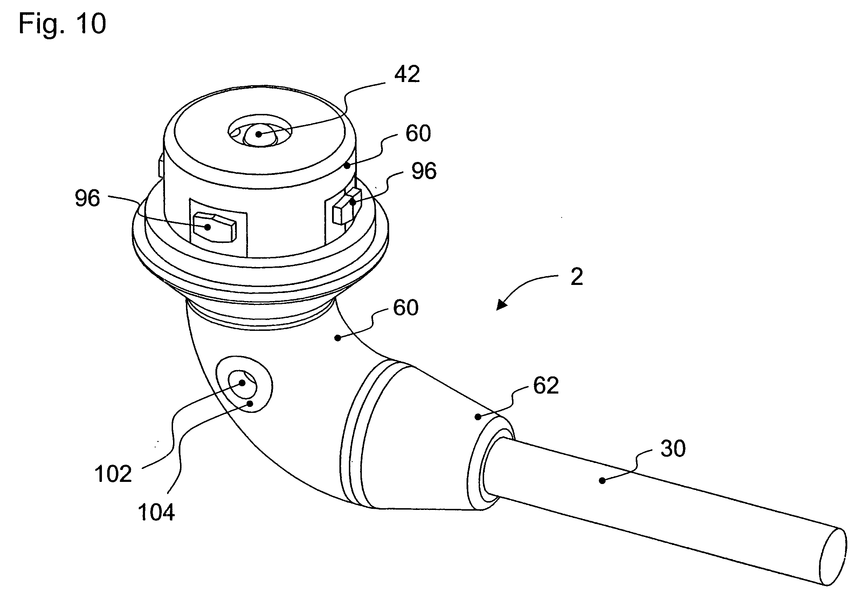

In Fig. 10 ist eine Ansicht der Baugruppe 2 nach erfolgtem Umspritzen dargestellt. Die Umspritzung 60 bildet bei dieser Ausführungsform sowohl eine äußere Umspritzung des Halters 88, als auch eine innere Umspritzung des Innenbereichs 94 des Halters 88, und des Schaltungsträgers. Das Umspritzmaterial dringt beim Umspritzen in die Überströmkanäle 100 in den Innenbereich des Halters 88 ein, wobei die im Innenbereich 94 enthaltene Luft durch die Entlüftungsöffnungen 102 entweichen kann, so daß sich im Innenbereich kein erhöhter Druck aufbaut, welcher das weitere Eindringen des Umspritzmaterials verhindern würde.

Wie bei den oben beschriebenen Ausführungsformen ist auch bei dieser Ausführungsform ein freies Ende 32 der Versorgungsleitung 30 von einem Zugentlastungsabschnitt 62 umgeben und wird von diesem im wesentlichen kraftschlüssig gehalten, wobei hier der Zugentlastungsabschnitt 62 von der äußeren Umspritzung gebildet wird.

Die Halbschalen 90 und 92 des Halters 88 weisen außerdem Rastnasen 96 auf. Diese dienen vorteilhaft zur Befestigung im Gehäuse der Fahrzeugleuchtvorrichtung. Beispielsweise können die Rastnasen in Verbindung mit geeigneten Nuten im Gehäuse einen Bajonettverschluss bilden. Dies ermöglicht eine besonders einfaches Austauschen der Baugruppe 2 oder des Gehäuses. Die Umspritzung wird so ausgeführt, daß diese Rastnasen frei bleiben. Die Kombination eines Halter 88 mit einer Umspritzung 60 ist unter anderem deswegen vorteilhaft, weil Materialien unterschiedlicher Härte und Elastizität miteinander kombiniert werden können. So können die Rastnasen des Halters 88 aus hartem Kunststoff hergestellt werden, während die Umspritzung 60 einen weichen, elastischen Kunststoff umfassen kann, aus welchem sich mechanisch widerstandsfähige Befestigungsmittel wie die Rastnasen 96 nur schlecht fertigen ließen.

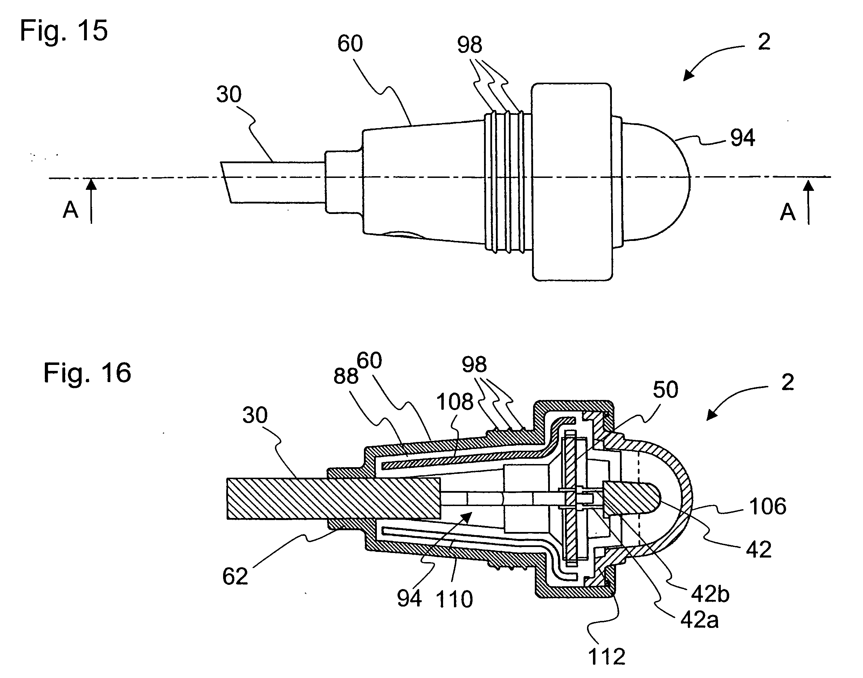

Im folgenden wird auf die Figuren 15 und 16 Bezug genommen, die noch eine weitere Ausführungsform einer Baugruppe 2 zeigen. Diese Ausführungsform ist im Gegensatz zu der anhand der Figuren 8 bis 14 gezeigten Ausführungsform nicht gewinkelt, sondern gerade konstruiert. Die Ausführungsform der Fig. 8 bis 14, sowie die anhand der Fig. 15 und 16 gezeigte Ausführungsform sind jedoch nur beispielhaft. Alle diese Ausführungsformen der Baugruppe 2 können sowohl gerade als auch gewinkelt konstruiert sein.

Auch die anhand der Figuren 15 und 16 gezeigte Ausführungsform weist einen Halter 88 auf, der einen Innenbereich definiert, in welchem der Schaltungsträger 50 aufgenommen ist. Der Träger 88 umfaßt wiederum zwei Halbschalen, welche jeweils eine Feder 108 und eine Nut 110 aufweisen. Für die Vormontage werden die Halbschalen aufeinandergesetzt, so daß jeweils eine Nut und eine Feder der Halbschalen ineinandergreifen und die Halbschalen zusammenhalten.

Im Unterschied zur oben beschriebenen Ausführungsform mit Träger weisen die Halbschalen bei dieser Ausführungsform keine in den Innenbereich führenden Überströmkanäle auf. Vielmehr ist bei dieser Ausführungsform vorgesehen, daß. der Innenbereich 94 nicht mit dem Umspritzmaterial aufgefüllt wird, sondern frei bleibt. Der Halter wird lediglich außen umspritzt, wobei jedoch auch durch diese äußere Umspritzung 60 eine hermetische Verkapselung des Schaltungsträgers 50 erreicht wird.

Um einen hermetischen Abschluß des Innebereichs 94 mit den darin angeordneten Komponenten, insbesondere des Schaltungsträgers 50 und der Leuchtdiode 42 zu erreichen, weist die Ummantelung der Baugruppe 2 zusätzlich eine transparente Kappe 106 auf, durch die das Licht der Leuchtdiode 42 nach außen treten kann. Die Kappe 106 weist außerdem einen Kragen 112 auf, welcher mit dem Umspritzmaterial umspritzt, beziehungsweise überspritzt wird, so daß eine Abdichtung des Innenbereichs 94 hergestellt wird.

Auch bei dieser Ausführungsform wird durch die Umspritzung 60 ein Zugentlastungsbereich 62 für die Zuführleitung definiert.

Gegenüber den oben beschriebenen Ausführungsformen ergibt sich bei dieser Ausführungsform, daß auch das Leuchtmittel vollständig verkapselt ist. Durch die Aussparung des Innenbereichs 94 wird außerdem weniger Umspritzmaterial benötigt, was die Baugruppe leichter macht und deren Fertigungskosten senkt.

Als Befestigungsmittel weist diese Baugruppe 2 außerdem noch Rastrippen auf, welche eine einfache formschlüssige Befestigung in einer geeigneten Öffnung ermöglichen. Die Baugruppe kann auch in einer Öffnung in einem vorgesehenen Fahrzeugteil befestigt und so bereits ohne weitere Gehäusung als Fahrzeugleuchtvorrichtung verwendet werden.

Es ist dem Fachmann ersichtlich, dass die Erfindung nicht auf die vorstehend beschriebene Ausführungsform beschränkt ist, sondern vielfältig variiert werden kann, ohne den Geist der Erfindung zu verlassen.

| Bezugszeichenliste | |
|---|---|
| 1 | Fahrzeugleuchtvorrichtung |
| 2 | Leuchtmittelbaugruppe |
| 10 | Gehäuse |
| 10c | untere Gehäusewandung |
| 10d | obere Gehäusewandung |
| 12, 14 | Lichtaustrittsscheiben |
| 16, 18 | Fresnel-Streulinse |
| 16a, 18a | Zentralbereiche der Fresnel-Streulinsen 16, 18 |
| 16b, 18b | Außenbereich der Fresnel-Streulinsen 16, 18 |
| 19 | Öffnung des Gehäuses 10 |
| 20 | Halter |
| 26 | Hohlraum |
| 29, 29a, 29b | Leuchtvolumina |
| 30 | Versorgungsleitung |
| 301, 302 | Litzen |
| 32 | freies Ende der Versorgungsleitung 30 |
| 42, 44 | Leuchtmittel |
| 42a, 42b, 44a, 44b | Anschlußbeine |
| 42c, 44c | Fußabschnitt |
| 50 | Schaltungsträger |
| 52 | Widerstandsanordnung |
| 521, 522 | Widerstände |
| | |
| 60 | Umspritzung |
| 62 | Zugentlastungsabschnitt der Umspritzung |
| 64 | Rumpfabschnitt der Umspritzung |
| 66 | Kopfabschnitt der Umspritzung |
| 68a, 68b | Leuchtmittelbefestigungsabschnitte |
| 70 | Trennwand |
| 72, 74 | Flügel der Trennwand 70 |
| 76 | Rippen der Flügel 72, 74 |
| 80 | Dichtungsabschnitt |
| 82, 84 | Versteifungsrippen |
| 88 | Halter |
| 90, 92 | Halbschalen der Ummantelung der Leuchtmittelbaugruppe |
| 94 | Innenbereich des Halters 88 |
| | |
| 96 | Rastnase |
| 98 | Rastrippe |
| 100 | Überströmkanal |
| 102 | Entlüftungsöffnung |
| 104 | Kragen |
| 106 | transparente Kappe |
| 108 | Steg |
| 110 | Nut |
| 112 | Befestigungskragen der Kappe 106 |

## Patentansprüche

**1.** Fahrzeugleuchtvorrichtung (1), insbesondere eine Fahrzeugbegrenzungsleuchte zum externen Anbringen an einem Fahrzeug mittels eines Halters (20), umfassend
eine Baugruppe mit einem Schaltungsträger (50) und zumindest einem ersten Leuchtmittel (42) und
ein Gehäuse (10) mit zumindest einem ersten Lichtaustrittsbereich für Licht, welches von dem ersten Leuchtmittel (42) emittierbar ist, wobei die Baugruppe zumindest bereichsweise in dem Gehäuse (10) angeordnet ist und zumindest bereichsweise (60) ummantelt ist.

**2.** Fahrzeugleuchtvorrichtung (1) gemäß Anspruch 1, **dadurch gekennzeichnet, dass** die Baugruppe zumindest bereichsweise, insbesondere mit elastischem Kunststoff (60) umspritzt ist.

**3.** Fahrzeugleuchtvorrichtung (1) gemäß Anspruch 1 oder 2, **dadurch gekennzeichnet, dass** die Baugruppe zumindest bereichsweise fluiddicht ummantelt oder umspritzt ist.

**4.** Fahrzeugleuchtvorrichtung gemäß einem der vorstehenden Ansprüche, **dadurch gekennzeichnet, dass**
eine elektrische Versorgungsleitung (30) umfasst ist,
die Baugruppe, insbesondere der Schaltungsträger (50) einen Kontaktabschnitt zum Kontaktieren eines freien Endes (32) der Versorgungsleitung (30) aufweist und
der Kontaktabschnitt und das freie Ende (32) der Versorgungsleitung (30) ummantelt oder umspritzt sind.

**5.** Fahrzeugleuchtvorrichtung (1) gemäß einem der vorstehenden Ansprüche, **dadurch gekennzeichnet, dass** die Baugruppe eine Versorgungsschaltung (52) für das erste Leuchtmittel (42) umfasst, wobei die Versorgungsschaltung (52) insbesondere einen Verpolschutz und/oder einen Spannungsreduzierer umfasst.

**6.** Fahrzeugleuchtvorrichtung (1) gemäß Anspruch 5, **dadurch gekennzeichnet, dass** der Spannungsreduzierer außerhalb des Gehäuses (10) angeordnet ist.

**7.** Fahrzeugleuchtvorrichtung (1) gemäß einem der vorstehenden Ansprüche, **dadurch gekennzeichnet, dass** die Ummantelung oder Umspritzung (60) einen Dichtungsabschnitt (80) zum Dichten einer Gehäuseöffnung (19) aufweist.

**8.** Fahrzeugleuchtvorrichtung (1) gemäß einem der vorstehenden Ansprüche, **dadurch gekennzeichnet, dass** die Ummantelung oder Umspritzung (60) Versteifungsabschnitte (82, 84, 86) umfasst.

**9.** Fahrzeugleuchtvorrichtung (1) gemäß einem der vorstehenden Ansprüche, **dadurch gekennzeichnet, dass** der Schaltungsträger (50) länglich ausgebildet ist und die Versteifungsabschnitte (82, 84, 86) Verstrebungen oder Rippen umfassen, welche sich entlang der Längsachse des Schaltungsträgers (50) erstrecken.

**10.** Fahrzeugleuchtvorrichtung (1) gemäß einem der vorstehenden Ansprüche, umfassend den Halter (20), welcher einen Kopfabschnitt (22) und einen Fußabschnitt aufweist, wobei der Kopfabschnitt (22) das Gehäuse (10) zumindest bereichsweise umgibt und der Fußabschnitt zur Befestigung an dem Fahrzeug ausgebildet ist.

**11.** Fahrzeugleuchtvorrichtung (1) gemäß Anspruch 10, **dadurch gekennzeichnet, dass** das Gehäuse durch eine kombiniert form- und reibschlüssige elastische Steckverbindung lösbar an dem Kopfabschnitt (22) festlegbar ist.

**12.** Fahrzeugleuchtvorrichtung (1) gemäß einem der vorstehenden Ansprüche, **dadurch gekennzeichnet, dass** das Gehäuse (10) und/oder der erste Lichtaustrittsbereich eine erste, insbesondere durchsichtige oder durchscheinende Lichtscheibe (12) umfasst, durch welche das Licht des ersten Leuchtmittels (42) aus dem Gehäuse (10) emittierbar ist.

**13.** Fahrzeugleuchtvorrichtung (1) gemäß Anspruch 12, **dadurch gekennzeichnet, dass** das Gehäuse (10) und/oder die erste Lichtscheibe (12) im wesentlichen farblos oder gelblich sind.

**14.** Fahrzeugleuchtvorrichtung (1) gemäß Anspruch 12 oder 13, **dadurch gekennzeichnet, dass** die erste Lichtscheibe (12) ein lichtbrechendes optisches Element (16) aufweist.

**15.** Fahrzeugleuchtvorrichtung (1) gemäß einem der Ansprüche 12 bis 14, **dadurch gekennzeichnet, dass** die erste Lichtscheibe (12) eine Streulinse (16), insbesondere eine Fresnellinse, aufweist.

**16.** Fahrzeugleuchtvorrichtung (1) gemäß einem der Ansprüche 12 bis 15, **dadurch gekennzeichnet, dass** das Gehäuse (10) und die erste Lichtscheibe (12) einstückig ausgebildet sind.

**17.** Fahrzeugleuchtvorrichtung (1) gemäß einem der vorstehenden Ansprüche, **dadurch gekennzeichnet, dass** das Gehäuse (10) im wesentlichen fluiddicht ist.

**18.** Fahrzeugleuchtvorrichtung (1) gemäß einem der vorstehenden Ansprüche, **dadurch gekennzeichnet, dass** das erste Leuchtmittel (42) zumindest eine erste Leuchtdiode umfasst.

**19.** Fahrzeugleuchtvorrichtung (1) gemäß einem der vorstehenden Ansprüche mit einer Leuchtmittelanordnung, welche zumindest das erste und ein zweites Leuchtmittel (42, 44) umfasst, **dadurch gekennzeichnet, dass**
die Leuchtmittelanordnung in dem Gehäuse (10) angeordnet ist,
das Gehäuse einen zweiten Lichtaustrittsbereich für Licht, welches von der Leuchtmittelanordnung, insbesondere von dem zweitem Leuchtmittel (44) emittierbar ist, umfasst und
das erste und zweite Leuchtmittel (42, 44) derart in dem Gehäuse (10) angeordnet sind, dass mittels des ersten Leuchtmittels (42) Licht im wesentlichen nur in einen ersten Raumwinkel und mittels des zweiten Leuchtmittels (44) Licht im wesentlichen nur in einen zweiten Raumwinkel emittierbar ist und der erste und zweite Raumwinkel verschieden sind.

**20.** Fahrzeugleuchtvorrichtung (1), insbesondere eine Fahrzeugbegrenzungsleuchte zum externen Anbringen an einem Fahrzeug und insbesondere gemäß einem der vorstehenden Ansprüche, umfassend eine Leuchtmittelanordnung und ein Gehäuse (10), wobei
die Leuchtmittelanordnung in dem Gehäuse angeordnet ist und zumindest ein erstes und zweites Leuchtmittel (42, 44) umfasst,
das Gehäuse (10) zumindest zwei Lichtaustrittsbereiche für Licht, welches von der Leuchtmittelanordnung emittierbar ist, umfasst,
die beiden Leuchtmittel (42, 44) derart in dem Gehäuse (10) angeordnet sind, dass mittels des ersten Leuchtmittels (42) Licht im wesentlichen nur in einen ersten Raumwinkel und mittels des zweiten Leuchtmittels (44) Licht im wesentlichen nur in einen zweiten Raumwinkel emittierbar ist und der erste und zweite Raumwinkel verschieden sind.

**21.** Fahrzeugleuchtvorrichtung (1) gemäß Anspruch 19 oder 20, **dadurch gekennzeichnet, dass** der erste und zweite Raumwinkel im wesentlichen entgegen gerichtet sind.

**22.** Fahrzeugleuchtvorrichtung (1) gemäß einem der Ansprüche 19 bis 21, **dadurch gekennzeichnet, dass** das erste und zweite Leuchtmittel (42, 44) zumindest eine erste bzw. zweite Leuchtdiode umfassen, wobei mittels der ersten und zweiten Leuchtdiode verschiedene Wellenlängenintervalle emittierbar sind.

**23.** Fahrzeugleuchtvorrichtung (1) gemäß einem der Ansprüche 19 bis 22, **dadurch gekennzeichnet, dass** zwischen dem ersten und zweiten Leuchtmittel (42, 44) ein Mittel zur optischen Trennung (70), insbesondere eine Trennwand angeordnet ist.

**24.** Fahrzeugleuchtvorrichtung (1) gemäß Anspruch 23, **dadurch gekennzeichnet, dass** das Mittel zur optischen Trennung (70) einstückig mit der Ummantelung (60) oder Umspritzung ausgebildet ist.

**25.** Fahrzeugleuchtvorrichtung (1) gemäß Anspruch 23 oder 24, **dadurch gekennzeichnet, dass** das Mittel zur optischen Trennung (70) flächige, insbesondere elastische Flügel (72, 74) aufweist.

**26.** Fahrzeugleuchtvorrichtung (1) gemäß einem der Ansprüche 23 bis 25, **dadurch gekennzeichnet, dass** das Mittel zur optischen Trennung (70) Rippen (76) zur Oberflächenvergrößerung umfasst.

**27.** Fahrzeugleuchtvorrichtung (1) gemäß einem der Ansprüche 23 bis 26, **dadurch gekennzeichnet, dass** das Mittel zur optischen Trennung (70) eine Einlage aus hochwärmeleitfähigem Material, insbesondere eine Kupferfolie umfasst.

**28.** Baugruppe (2) insbesondere für eine Fahrzeugleuchtvorrichtung (1) gemäß einem der Ansprüche 1 bis 27, umfassend einen Schaltungsträger (50), zumindest ein erstes Leuchtmittel (42) und eine Ummantelung, welche den Schaltungsträger (50) umgibt, **dadurch gekennzeichnet, daß** die Ummantelung eine fluiddichte, insbesondere eine wasserdichte Umspritzung (60) umfaßt.

**29.** Baugruppe nach Anspruch 28, **dadurch gekennzeichnet, daß** die Ummantelung einen Halter (88) umfaßt, in welchem der Schaltungsträger (50) aufgenommen ist.

**30.** Baugruppe nach Anspruch 29, welche eine Versorgungsleitung (30) aufweist, **dadurch gekennzeichnet, daß** die Versorgungsleitung (30) in dem Halter geführt ist.

**31.** Baugruppe nach Anspruch 29 oder 30, **dadurch gekennzeichnet, daß** der Halter (88) zwei Halbschalen umfaßt.

**32.** Baugruppe nach einem der Ansprüche 29 bis 31, **dadurch gekennzeichnet, daß** der Halter einen Innenbereich (94) definiert, in welchem der Schaltungsträger (50) aufgenommen ist.

**33.** Baugruppe nach Anspruch 32, **dadurch gekennzeichnet, daß** die Umspritzung (60) zumindest bereichsweise den Innenbereich (94) des Halters auffüllt.

**34.** Baugruppe nach einem der Ansprüche 29 bis 33, **dadurch gekennzeichnet, daß** der Halter zumindest einen Überströmkanal (100) aufweist.

**35.** Baugruppe nach einem der Ansprüche 29 bis 34, **dadurch gekennzeichnet, daß** der Halter (88) zumindest bereichsweise von der Umspritzung (60) umgeben ist.

**36.** Baugruppe nach einem der Ansprüche 28 bis 34, **dadurch gekennzeichnet, daß** die Baugrupppe zumindest eine Rastnase (96) und/oder Rastrippe (98) aufweist.

**37.** Baugruppe nach einem der Ansprüche 28 bis 36, **dadurch gekennzeichnet, daß** das Leuchtmittel (42) eine Leuchtdiode umfaßt.

**38.** Baugruppe nach einem der Ansprüche 28 bis 37, **dadurch gekennzeichnet, daß** die Ummantelung eine transparente Kappe (106) umfaßt.

**39.** Verfahren zur Herstellung einer Baugruppe für eine Fahrzeugleuchtvorrichtung, insbesondere für eine Fahrzeugleuchtvorrichtung gemäß einem der Ansprüche 1 bis 27, welches die Schritte umfaßt:
- Anschließen einer elektrischen Versorgungsleitung (30) an einen Schaltungsträger (50) mit zumindest einem ersten Leuchtmittel (42),
- Anordnen des Schaltungsträgers (50) in einer Spritzform und
- Umspritzen des Schaltungsträgers (50) mit Kunststoff.

**40.** Verfahren nach Anspruch 39, **dadurch gekennzeichnet, daß** der Schritt des Umspritzens des Schaltungsträgers (50) mit Kunststoff den Schritt des Umspritzens mit einem elastischen Kunststoff umfaßt.

**41.** Verfahren nach Anspruch 39 oder 40, **gekennzeichnet durch** den Schritt des Befestigens des Schaltungsträgers (50) an oder in einem Halter (88).

**42.** Verfahren nach Anspruch 41, **dadurch gekennzeichnet, daß** der Halter aus zumindest zwei Halbschalen (90, 92) zusammengesetzt wird.

**42.** Verfahren nach Anspruch 41 oder 42, wobei der Halter (88) einen Innenbereich (94) definiert, in welchem der Schaltungsträger (50) angeordnet wird.

**43.** Verfahren nach Anspruch 42, **dadurch gekennzeichnet, daß** der Innenbereich (94) mit Umspritzmaterial aufgefüllt wird.

**44.** Verfahren nach Anspruch 42, **dadurch gekennzeichnet, daß** der Innenbereich (94) frei von Umspritzmaterial bleibt.

**45.** Verfahren nach einem der Ansprüche 39 bis 44, **gekennzeichnet durch** den Schritt des Befestigens einer transparenten Kappe (106)
